(19) Europäisches Patentamt

European Patent Office

Office européen des brevets

(11) EP 0 941 900 A2

(12) **EUROPEAN PATENT APPLICATION**

(43) Date of publication:
15.09.1999 Bulletin 1999/37

(51) Int. Cl.⁶: **B60S 1/08**

(21) Application number: 99301803.5

(22) Date of filing: 10.03.1999

(84) Designated Contracting States:
**AT BE CH CY DE DK ES FI FR GB GR IE IT LI LU MC NL PT SE**
Designated Extension States:
**AL LT LV MK RO SI**

(30) Priority: **10.03.1998 JP 5828598**
**10.03.1998 JP 5828698**
**10.03.1998 JP 5828998**

(71) Applicant:
**Nippon Sheet Glass Co., Ltd.**
**Osaka-shi, Osaka (JP)**

(72) Inventors:
• **Tanaka, Shuhei,**
**c/o Nippon Sheet Glass Co., Ltd.**
**Osaka-shi, Osaka (JP)**
• **Murakami, Harunori,**
**Nippon Sheet Glass Co., Ltd.**
**Osaka-shi, Osaka (JP)**

(74) Representative:
**Jackson, Robert Patrick**
**Frank B. Dehn & Co.,**
**European Patent Attorneys,**
**179 Queen Victoria Street**
**London EC4V 4EL (GB)**

(54) **Water detection sensor**

(57) A water drop detection sensor for detecting water drops W adhering upon either surface of a windshield (2) by detecting the change in an light amount of reflected detection light comprises a light emitting means (5) for illuminating the detection light into the windshield (2), and a light receiving means (6) for detecting the detection light which is generated by total internal reflection within the windshield (2), wherein the light emitting means (5) and the light receiving means (6) are fixed on an interior surface of the windshield (2) with adhesive material (4).

FIG. 2

Water Drop W
Wind Shield 2
6a
5a
4
7
Adhesive Material 4
Light Receiving Means 6
1
Light Emitting Means 5
Light Shield Member 8

EP 0 941 900 A2

## Description

The present invention relates to a water drop detection sensor for detecting the presence or adhesion of water drops upon a light-permeable substrate such as a window glass used in an automobile or other vehicle, by moans of a light emitting element and a light receiving element.

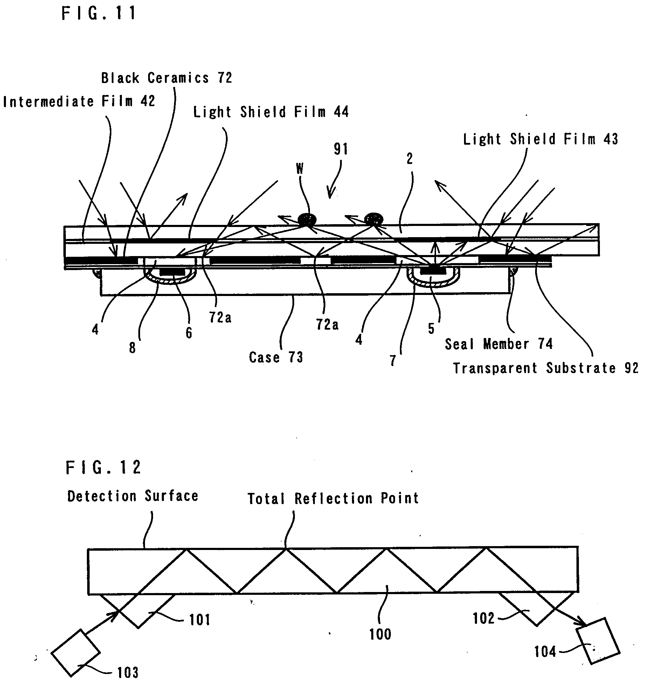

Conventionally, attempts have been made to detect water drops present or adhering upon the front glass (windshield) of a car so as to automatically operate or initiate a wiper, and an example of a substrate having such a detection function is known, having the structure as shown in Fig. 12 attached.

In Fig. 12, a pair of prisms 101 and 102 are attached onto the surface of a transparent substrate 100 -- such as a glass plate or the like -- in which light from a light source 103 is introduced through a prism 101 at an incident angle so as to cause total internal reflection of the light. By setting the incident angle so that total internal reflection will not occur if a liquid such as water is present upon or adheres to the surface of the transparent substrate 100, the amount of light that undergoes the total internal reflection changes depending upon the existence of the liquid at the total internal reflection points on the glass surface. Thereby the existence of the liquid can be detected by detecting the amount of light received by the light receiving element 104.

In Japanese Patent Laying-Open No. Sho 60-216245 (1985), it is disclosed that the prism is set at such an angle that the light reflected from the water drops is incident upon the light receiving element only when the water drops adhere upon the glass surface, since the sensitivity for detecting the water drops is not enough with the detection method similar to that explained above.

Further, in Japanese Patent Laying-Open No. Sho 62-163949 (1987), there is disclosed a construction in which there are provided two light sources, wherein the incident angle of the light from one of these is set to be greater than a critical angle for the total internal reflection to occur upon the detection surface thereof, while that the light from the other source is set to be less than the critical angle for the total internal reflection to occur upon detection surface thereof, thereby enabling discrimination of the presence or absence of water drops upon a glass.

Furthermore, in Japanese Patent Laying-Open No. Hei 8-261974 (1996), there is also disclosed a construction in which a transparent electrode of the so-called "comb" shape is positioned inside the glass plate to detect changes in electrostatic capacity, thereby actuating the control of closing or opening of a window or of a heater.

Moreover, in Japanese Patent Laying-Open No. Hei 6-509652 (1994) -- later a PCT application -- there is also disclosed a construction of a detection unit, such as a prism, which is attached upon the interior surface of the windshield through an intermediate layer which has two adhesive surfaces. This device also detects water drops on the outside surface of the windshield and controls the operation of a wiper for the windshield depending on the detected result.

With the transparent substrate having the conventional optical detection function, one or more prisms is necessary for introducing the light into the glass to undergo total internal reflection, and these prisms must be closely contacted upon the glass surface, therefore requiring excessive labor and time for the fitting or mounting operation. In particular, because almost all windshields for use in a car -- or other wind-shielding glass plates used in other vehicles -- are designed to have a curved surface, it is difficult therefore to contact the prism upon the glass surface closely.

Moreover, for preventing unnecessary reflection on the boundary surface between the prism and the glass, the refractive indexes of the two also must be selected so as to be as close to each other as possible (i.e., refractive index matching). For this reason, a matching layer can be provided thereinbetween, but this increases the number of steps for manufacturing and brings about a disadvantage in the cost.

On the contrary, the method in which the water drops are detected by the variation of electric resistance or electrostatic capacity between the electrodes, such as disclosed in Japanese Patent Laying-Open No. Hei 8-261974 (1996), is inferior in durability and sensitivity to that of the above-described optical methods. In particular, for a windshield used in a car, it is important that the detected signal corresponds to the physical, conditions actually seen by the driver or co-driver, and in this sense, optical method sensor is preferable. the present invention, there is provided a water detection sensor for detecting water adhering to or present upon a substrate by sensing changes in an amount of reflected detection light, comprising:

a light-permeable substrate;

light emitting means for introducing detection light into the light-permeable substrate; and

light receiving means for detecting reflected detection light, the reflected detection light being reflected by total internal reflection within said light-permeable substrate, wherein the light receiving means is provided on the light-permeable substrate.

With this sensor, the prisms are not necessary, thereby obtaining a simple construction. Further, the light enters into the light-permeable substrate at a certain incident angle and undergoes total internal reflection therein, and thus it can be utilized effectively. Further the detection surface for any water adhering on the surface of the light-permeable substrate comprises a reflection surface made up of a large number of reflection points, rather than dispersed reflection points. Therefore, the area for detection of the water is large, compared to that when detecting only those water adhering to or present upon the dispersed reflection points, thus improving the precision of detection.

Further, according to the present invention, there is provided a water detection sensor as mentioned above, wherein the light emitting means and light receiving means are provided on said light-permeable substrate through a second substrate.

With this structure, the assembling or mounting of the water detection sensor comes to be easy, compared to fixing the light emitting means and the light receiving means directly on the light-permeable substrate separately at a predetermined distance thereinbetween, thereby improving the ease of manufacturing.

Further, according to the present invention, there is provided a water detection sensor as described above, wherein a light emitting surface of said light emitting means is directed in a direction such that the reflected detection light undergoes total internal reflection, and wherein a light receiving surface of said light receiving means is directed in a direction so as to detect the reflected detection light which is reflected by total internal reflection.

With this structure, the ratio of light detected as the reflected detection light of the light emitted from the light emitting surface can be increased, thereby obtaining effective utilization of the emitted light, while receiving the reflected detection light with certainty.

Next, according to the present invention, there is provided a water detection sensor for detecting water adhering to or present upon a substrate by sensing changes in an amount of reflected detection light, comprising:

a light-permeable substrate having an intermediate layer;

light emitting means for introducing detection light into the light-permeable substrate; and

light receiving means for detecting reflected detection light, the reflected detection light being reflected by total internal reflection within said light-permeable substrate, wherein the light receiving means is provided on the light-permeable substrate, and a portion of said intermediate layer opposite to the light emitting means is made of either a light shielding film or a light reflecting film.

With this sensor, the prisms are not necessary, thereby obtaining a simple construction. Further, by making a portion of the intermediate layer opposite to the light emitting means either a light shielding film or a light reflecting film, it is possible to reduce the amount of light escaping outside from the light emitting means, as well as to protect the sensor from any external ambient light entering inside the light emitting means or the light receiving means directly from the outside, thereby obtaining stable operation of the sensor. Furthermore, by making a portion of the intermediate layer opposite to the light emitting moans and the light receiving means a light reflecting film, an effective utilization of the emitted light can be obtained.

Also, according to the present invention, there is provided a water detection sensor as mentioned above, wherein a portion of the intermediate layer located between the light shielding film or the reflection film and the substrate comprises the light reflecting film.

With this structure, a larger number of detection points can be obtained with the same light path length, thereby achieving a smaller size and a high sensitivity for the water detection sensor.

Further, according to the present invention, there is provided a water detection sensor as mentioned above, wherein a portion of the intermediate layer located between the light shielding film or the light reflecting film and the substrate comprises a layer of air.

With this structure also a larger number of detection points can be obtained with the same length of light path, thereby achieving a small sized and high sensitivity water detection sensor.

Moreover, according to the present invention, there is provided a water detection sensor for detecting water adhering to or present upon a substrate by sensing changes in an amount of reflected detection light, comprising:

light emitting means for introducing detection light into the light-permeable substrate; and

light receiving means for detecting reflected detection light, the reflected detection light being reflected by total internal reflection within said light-permeable substrate, wherein said light receiving means is provided on a non-pasted portion of a black ceramic member on a surface of said light-permeable substrate, and said non-pasted portion of the black ceramic member is formed at a reflection point.

With this sensor, the prisms are not necessary, thereby obtaining a simple construction. Further, since it can be positioned in common with other apparatuses or devices anyplace where the black ceramic member can be pasted, thereby detecting the water adhering to or present upon the light-permeable substrate with certainty, a significant space-living advantage for the mounting thereof can be realized.

Further, there is provided a water detection sensor for detecting water adhering to or present upon a substrate by sensing changes in an amount of reflected detection light as mentioned above, wherein a reflection film is provided at said reflection point portion which serves as the non-pasted portion of the black ceramic member.

With this structure, the water adhering on the light-permeable substrate can be detected with certainty, without obtaining false readings due to dew drops condensing on the light-permeable substrate.

Furthermore, according to the present invention, there is provided a water detection sensor as mentioned above, wherein said light emitting means and said light receiving means are provided in the non-pasted portion of the black ceramic member on the surface of the light-permeable substrate through a second substrate.

With this structure, the water detection sensor can be attached on the light-permeable substrate with ease, comparing to fixing the light emitting element and the light receiving element separately at a predetermined distance directly onto the light-permeable substrate, thereby improving ease of manufacturing.

Preferred embodiments of the invention will now be described, by way of example only, and with reference to the accompanying drawings in which:

Fig. 1 is a perspective view of a front portion of a car installed with a water detection sensor according to the present invention;

Fig. 2 is an explanatory view of the structure of a water detection sensor according to a first embodiment of the present invention;

Fig. 3 is a block diagram of a water detection sensor according to the present invention, applied to a wiper control system;

Fig. 4 is an explanatory view of the structure of a water detection sensor according to a second embodiment of the present invention;

Fig. 5 is an explanatory view of the structure of a water detection sensor according to a third embodiment of the present invention:

Fig. 6 is an explanatory view of the structure of a water detection sensor according to a fourth embodiment of the present invention;

Fig. 7 is an explanatory view of the structure of a water detection sensor according to a fifth embodiment of the present invention;

Fig. 8 is an explanatory view of the structure of a water drop detection sensor according to a sixth embodiment of the present invention;

Fig. 9 is an explanatory view of the structure of a water detection sensor according to a seventh embodiment of the present invention, and in particular, Fig. 9 (a) is a cross-section view and Fig. 9 (b) a rear view thereof;

Fig. 10 is an explanatory view of the structure of a water detection sensor according to an eighth embodiment of the present invention, and in particular, Fig. 10 (a) is a cross-section view and Fig. 10 (b) a rear view thereof;

Fig. 11 is an explanatory view of the structure of a water detection sensor according to a ninth embodiment of the present invention; and,

Fig. 12 is an explanatory view of the structure of a conventional water detection sensor.

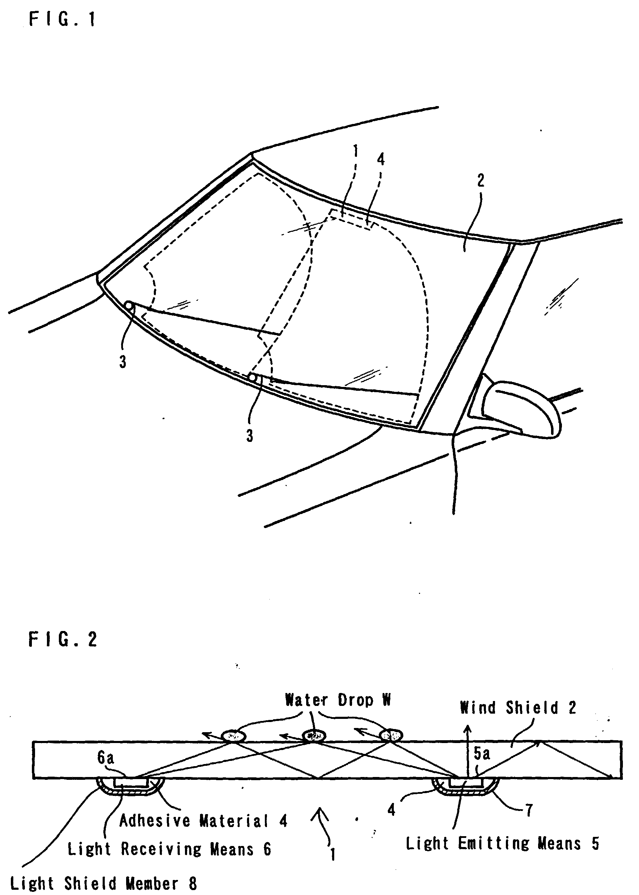

As shown in Fig. 1, a water drop detection sensor 1 is attached or fixed on an interior surface of a windshield 2 of a car with an adhesive material 4, and the area swept by one or more external wiping blades comprises the wiping area. The windshield 2 is made from soda lime glass having a thickness of 5 mm and mainly containing $SiO_2$, for example.

As shown in Fig. 2, the water drop detection sensor 1 according to the first embodiment of the present invention comprises a light emitting means 5 and a light receiving means 6, being provided at a predetermined distance between them on the interior surface of the windshield 2. The light emitting means 5 is buried into the adhesive material 4 so as to be fixed and so that a light emitting surface thereof is oriented towards the windshield 2. The light receiving means 6 is also buried into the adhesive material 4 so as to be fixed and so that a light receiving surface thereof is oriented towards the windshield 2.

The reason for fixing the light emitting means 5 and the light receiving means 6 on the interior surface of the windshield 2 with the predetermined distance thereinbetween is to maintain or ensure a predetermined area for detection upon the outside surface of the windshield 2, while maintaining any loss of detection light emitted from the light emitting means 5 at a predetermined level by making the light path from the light emitting means 5 to the light receiving means 6 as short as possible.

As the adhesive material 4, there is selected an adhesive, such as an epoxy adhesive or an ultraviolet ray-curable epoxy adhesive, which has a refractive index approximately equal to the refractive index (1.48) of the windshield 2. Further, after adhering or sticking the light emitting means 5 and the light receiving means 6 onto the interior surface of the windshield 2 with a transparent adhesive of silicon, it is also possible to fix the light emitting means 5 and the light receiving means 6 thereto by burying them into the two instances of adhesive material 4 (see Fig. 2).

Furthermore, there are provided light shielding members 7 and 8 for covering the adhesive material 4 put on the windshield 2, for fixing the light emitting means 5 and the light receiving means 6 thereto.

Both light shielding members 7 and 8 are made of resin or metal for optically shielding the adhesive materials 4, and light shielding member 7 has the function of preventing the light emitted from the light emitting means 5 from leaking unnecessarily, while light shielding member 8 prevents external ambient light from entering into the light receiving means 6 directly from the outside. Therefore, any light leaking from the light emitting means 5 will not propagate through the inside of the windshield 2, nor enter into the light receiving means 6 directly.

Also, each of the contacting surfaces between both light shielding members 7 and 8 and the adhesive material 4, i.e., each surface of the light shielding members 7 and 8 opposite to the light emitting means 5 and the light receiving means 6 may be light reflecting surfaces.

Further, each of the contacting surfaces between both light shielding members 7 and 8 and the adhesive material 4, i.e., each surface of the light shielding members 7 and 8 opposite to the light emitting means 5 and the light receiving means 6 may be formed with a concave mirror surface.

With the provision of the property of light reflection or the concave mirror surface on the surface that contacts with the adhesive material 4 of the light shielding members 7 and 8 in this manner, any light emitted from the light emitting means 5 to the rear or to the sides can be collected and focused so as to propagate into the windshield 2 and be used as the detection light. Further with this, any of the emitted detection light which does not enter into the light receiving means 6 by propagating in the inside of the windshield 2 can enter into the light receiving means 6 by reflecting upon the light shielding member 8, thereby obtaining an effective utilization of the light.

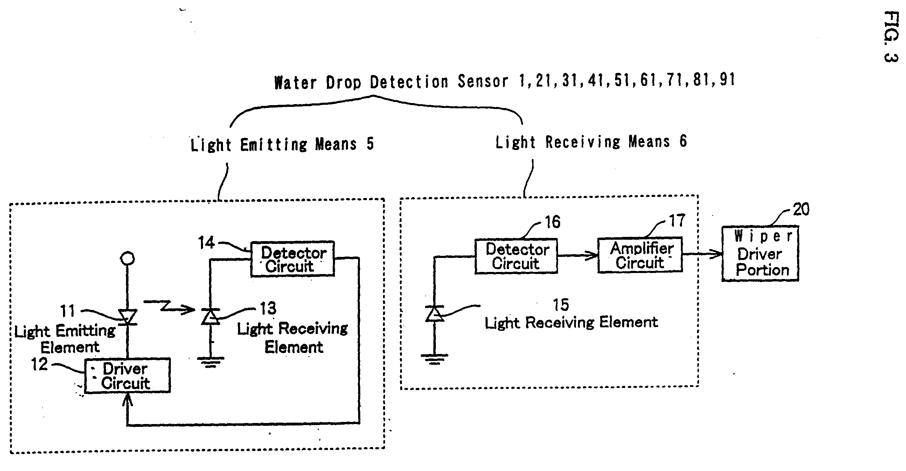

The light emitting means 5, as shown in Fig. 3, comprises a light emitting element 11 -- such as a light emitting diode (LED) or a laser diode (LE) -- a driver circuit 12 for driving the light emitting element 11 to output the light which is modulated with a, predetermined frequency, a light receiving element 13, such as a photo diode (PD) for monitoring the output level of the light emitting element 11, and a detector circuit 14 for removing a signal corresponding to the modulation component from the output signal of the light receiving element 13 so as to feed it back to the driver circuit 12. The driver circuit 12 controls the driving current flowing through the light emitting element 11 so as to maintain the output signal of the detector circuit 14 at a desired output level.

The light receiving means 6, as shown in Fig. 3, comprises a light receiving element 15, such as a PD, a detector circuit 16 for removing a signal corresponding to the modulation component modulated by the driver circuit 12 of the light emitting element from the output signal of the light receiving element 15, and an amplifier circuit 17 for amplifying the output signal of the detector circuit 16. The output signal of the amplifier circuit 17 is inputted into a wiper driver portion 20 to be used to control the wipers 3.

However, the light emitting means 5 can be constructed with only the light emitting element 11, or with the light emitting element 11 and the light receiving element 13 for monitoring, while providing the other elements -- such as the driver circuit 12 and the detector circuit, etc. -- in another place separately. Also, the light receiving means 6 can be constructed with only the light receiving element 15, while providing the detector circuit 16 and the amplifier circuit 17, etc., in another place separately.

Operation of the water drop detection sensor 1 constructed as described above will now be explained. The light emitted from the light emitting means 5 is irradiated in every direction, in the case where the light emitting element 11 is an LED, or otherwise is irradiated substantially in one direction, in the case where the light emitting element 11 is an LD.

The emitted light enters into the inside of the windshield 2 through the adhesive material 4, which is substantially transparent. The light emitted from the light emitting means 5, however, propagates straight on without refraction at the boundary surface between the adhesive material 4 and the windshield 2 since the adhesive material 4 is so selected to have a refraction index approximately equal to that of the windshield 2.

As shown in Fig. 2, any light entering into the inside of the windshield 2 at an incident angle less than a critical angle transmits through the windshield 2 to the outside.

Further, in a case where no water drop W adheres upon either the outside or the interior surface of the windshield 2, any light entering into the inside of the windshield 2 at an incident angle greater than the critical angle penetrates through the inside of the windshield 2 and alternately experiences total internal reflections at the boundary surface between the outside surface of the windshield 2 and the ambient air, and at the boundary surface between the interior surface of the windshield 2 and the (interior) ambient air. That light which experiences total internal reflection inside the windshield 2 will subsequently propagate so as to enter into the light receiving means 6.

Here, for obtaining the incident angle at which the total internal reflection occurs upon the boundary surface between the air and the glass, i.e., the critical angle, the following calculation can be made using Snell's law.

A general equation of Snell's law is as expressed by the equation (Eq. 1) below, where, $\alpha$ and $\alpha_0$ represent angles with respect to a normal line on the boundary surface between two materials of refractive index n and $n_0$ ($\alpha$: incident angle, $\alpha_0$: refraction angle):

$$n_0 \sin \alpha_0 = n \sin \alpha \qquad \text{(Eq. 1)}$$

When the refractive index of the glass is n=1.48 and since the refractive index $n_0$ of air is $n_0$=1, the necessary condition for the incident angle $\alpha$ for total internal reflection to occur inside the glass is that the refraction angle $\alpha_0$ is greater than or equal to 90°, i.e. $\alpha_0 \geq 90°$. The incident angle $\alpha$ in that instance is $\alpha \geq 42.5°$ from (Eq. 1).

Accordingly, if the incident angle $\alpha$ is equal or greater than the critical angle (42.5°), total internal reflection occurs inside the glass medium.

On the other hand, even in a case where water adheres to or is present upon the glass, the condition of the incident angle $\alpha$ for total internal reflection to occur upon the boundary surface between the water and the glass inside the glass is $\alpha \geq 64.0°$, found by making the same calculation assuming that the refractive index of water is $n_0$=1.33.

Accordingly, if the incident angle $\alpha$ is equal to r greater than the critical angle (64.0°), total internal reflection occurs inside the glass medium.

Accordingly, if the incident angle a lies in the region from 42.5° to 64.00 (42.5° $\leq \alpha \leq$ 64.0°), total internal reflection occurs inside the glass when no water adheres to or is present on the glass, while no total internal reflection occurs when the water adheres to or is present on the glass, i.e., the light escapes from the inside of the glass to the outside through the water.

For causing such a reflection, the incident angle of the light which is emitted from the light emitting means 5 is set by adjusting the position of fixing the light emitting means 5 to satisfy the condition for the incident angle $\alpha$ (42.5° $\leq \alpha \leq$ 64.0°). Also, since the incident angle of the reflected light entering into the light receiving means 6 is in a relationship that is symmetric with respect to the light emitting means 5, the fixing position of the light receiving means 6 is also adjusted so as to receive the reflected light avoiding any leakage thereof.

Therefore, in a case where a water drop W adheres upon either one of the outside surface or the interior surface of the windshield 2 -- or upon both of them -- the light penetrates through the water drop W outside of the windshield 2, thereby reducing the amount of light reaching light receiving means 6.

Therefore, the amount of water drops W can be detected by detecting the amount of the light which reduces and performing a calculation on the basis thereof.

According to the present invention, since all the light that satisfies the condition for the incident angle $\alpha$ (42.5° $\leq \alpha \leq$ 64.0°) can be utilized, the detection surface on which the water drops W can be detected can be a reflection surface formed from a collection of a large number of reflection points. Therefore, the area for detecting the water drops W comes to be large, compared to the case of detecting the water drops W adhering to or present upon only the reflection points, thereby improving the accuracy of defection.

As indicated in Fig. 3, the water drop detection sensor 1 provides an input to the wiper driver portion 20 with an output signal corresponding to the amount of water drops W detected.

Also, the wiper driver portion 20 initiates operation of the wiper 3 at intervals corresponding to the amount of water drops W when the detected amount of water drops W exceeds a preset value, and it stops the operation of the wiper 3 when the detected amount of water drops W comes to be less than a preset value.

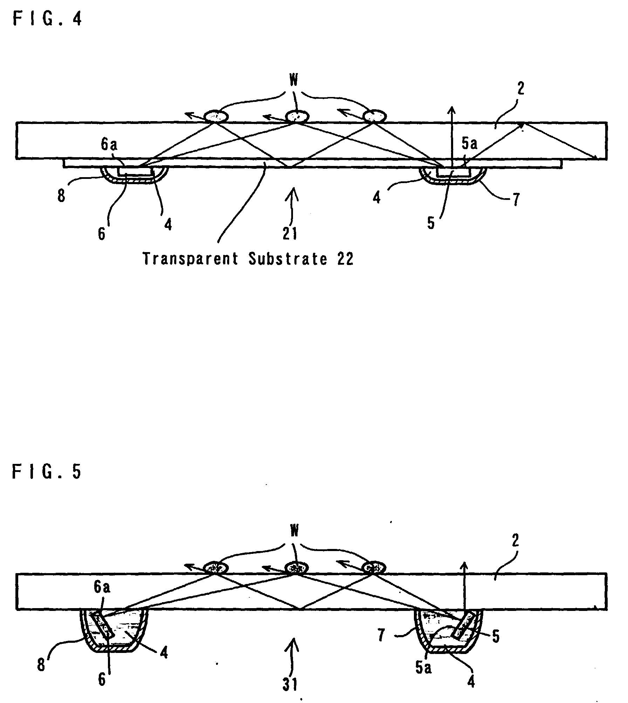

As shown in Fig. 4, a water drop detection sensor 21 according to the second embodiment of the present invention comprises the light emitting means 5, the light receiving means 6, and a transparent substrate 22, wherein the light emitting means 5 and the light receiving means 6 are fixed on one surface side of the transparent substrate 22 at a predetermined distance thereinbetween. Both the light emitting means 5 and the light receiving means 6 are so fixed onto the transparent substrate 22 so that they are buried into the adhesive materials 4. Here, as the substrate constructing the water drop detection sensor 21 together with the light emitting means 5 and the light receiving means 6 fixed thereon, the device is not restricted to only a transparent substrate 22 comprised of glass, but may also be applied to a light-permeable transparent substrate comprising an opaque glass substrate, a resin substrate, and so on.

As to the provisions of the light shielding members 7 and 8 covering the adhesive material 4 put on the transparent substrate 22 for fixing the light emitting means 5 and the light receiving means 6 thereon, the property of reflection on the contacting surfaces between the light shielding members 7 and 8 and the adhesive materials 4, and the concave mirror surfaces on the contacting surfaces between the light shielding members 7 and 8 and the adhesive materials 4, are the same as in the water drop detection sensor 1 shown in Fig. 2.

Also, the water drop detection sensor 21 is fixed onto the interior surface of the windshield 2 through the adhesive material 4, at the other surface thereof. Further, the windshield 2 also comprises a substrate of soda lime glass mainly containing $SiO_2$ therein, in the same manner as the windshield 2 in the first embodiment. Moreover, in the method for attaching the transparent substrate 22 on which the light emitting means 5 and the light receiving means 6 are fixed upon the interior surface of the windshield 2, a transparent adhesive sheet of silicon can also be used instead of the adhesive materials 4 mentioned above.

Explanation will be given of the operation of the water drop detection sensor 21 constructed as described above. The water drop detection sensor 21 is constructed by fixing the light emitting means 5 and the light receiving means 6 on the transparent substrate 22 at the predetermined distance thereinbetween, in advance. Therefore it can be easily mounted on the interior surface of the windshield 2, as compared to fixing the light emitting means 5 and the light receiving means 6 at the predetermined distance on the interior surface thereof separately, thereby improving the ease of manufacturing thereof. Other functions and effects obtained with the water drop detection sensor 21 are the same as or similar to those obtained with the water drop detection sensor 1 shown in Fig. 2.

As shown in Fig. 5, a water drop detection sensor 31 according to a third embodiment of the present invention is constructed by fixing the light emitting means 5 and the light receiving means 6 on the interior surface of the windshield 2 or on the transparent substrate 22 in such a manner that a light emitting surface 5a of the light emitting means 5 is directed into the incident direction of the emitted light, while a light receiving surface 6a of the light receiving means 6 is directed into the direction of the reflected detected light entering into the windshield and propagating by total internal reflection. The other construction and features of this embodiment are the same or similar to those of the water drop detection sensor 1 shown in Fig. 1. However, note that Fig. 5 shows an embodiment in which the light emitting means 5 and the light receiving means 6 are fixed directly onto the interior surface of the windshield 2.

Explanation will be given on the operation of the water drop detection sensor 31 constructed as above. In a case where the light emitting element 11 is an LED, since the light emitted irradiates in every direction, the percentage of light emitted from the light emitting surface 5a can be increased, in particular for that portion of the light functioning as detection light, by directing the light emitting surface 5a into the incident direction in which the detection light undergoes total internal reflection, thereby achieving an more effective utilization of the light. Further, by directing the light receiving surface 6a into the direction of the detection light at which it the total internal reflection occurs, it is possible to detect the reflected detection light with certainty. Other functions and effects obtained with this water drop detection sensor 31 are the awe or similar to those obtained with the water drop detection sensor 1 shown in Fig. 2.

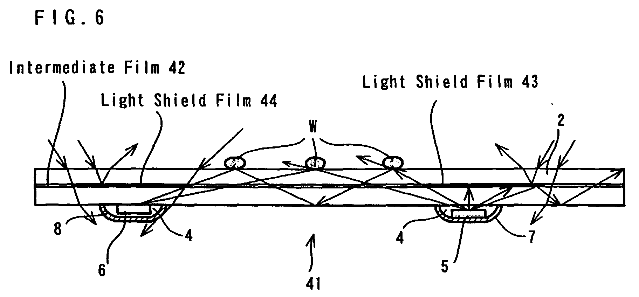

As shown in Fig. 6, a water drop detection sensor 41 according to a fourth embodiment of the present invention comprises the light emitting means 5 and the light receiving means 6, provided with a predetermined distance between them on the interior surface of the windshield 2, wherein the light emitting means 5 is buried into the adhesive material 4 to be fixed while opposing the light emitting surface of the light emitting means 5 to the windshield 2, and also, in the same manner, the light receiving means 6 is buried into the adhesive material 4 to be fixed while opposing the light receiving surface of the light receiving means 6 to the windshield 2.

The windshield 2 has an intermediate film or layer 42, and portions of the intermediate film 42 are made of light shielding films 43 and 44, which are located opposed to the light emitting means 5 and the light receiving means 6 respectively.

The light shielding film 43 is provided for the purpose of preventing that portion of the light emitted from the light emitting means 5 which does not undergo total internal reflection in the windshield 2 from leaking or escaping outside, and for the purpose of protecting the light emitting means 5 from any light entering into it directly from the outside. Further, the light shielding film 44 is provided for the purpose of protecting the light receiving means 5 from any light entering into it directly from the outside, as far as it does not interrupt the light entering and propagating and undergoing total internal reflection in the windshield 2. The other constructions of this embodiment are the same as or similar to those of the water drop detection sensor 1 shown in Fig. 2.

However, it is also possible to fix or mount the water drop detection sensor 1 on the interior side of the windshield 2 with the adhesive material 4, after constructing or completing water drop detection sensor 1 by fixing the light emitting means 5 and the light receiving means 6 onto a light-permeable substrate, such as a transparent substrate.

Explanation will be given on an operation of the water drop detection sensor 41 being constructed as described above. With this construction, even the light entering into the windshield 2 at an incident angle which is less than the critical angle will not escape outside the windshield 2 due to the light shielding film 43.

Further, if the light shielding film 43 has this reflection function, any light entering into the windshield 2 at an incident angle which is less than the critical angle is reflected by the light shielding film 43, thereby achieving an effective utilization of the light, since there is a possibility that it will be further reflected upon the light shielding member 7 so as to enter into the windshield 2 at an incident angle greater than the critical angle. Other functions and effects obtained with this embodiment are the same as or similar to those of the water drop detection sensor 1 shown in Fig. 2.

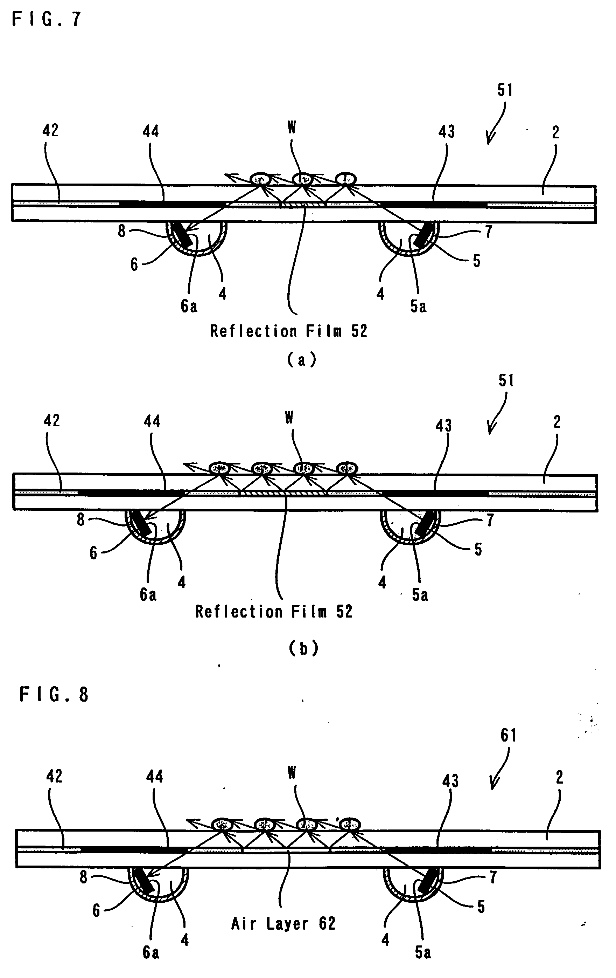

As shown in Fig. 7, a water drop detection sensor 51 according to a fifth embodiment of the present invention comprises the intermediate film or layer 42 laying between the light shielding films 43 and 44, wherein a portion thereof is formed by a reflection film 52. The other construction features are similar to those of the water drop detection sensor 41 shown in Fig. 6.

With the structure shown in Fig. 7 (a), since the reflection film 52 is provided in the middle of the windshield 2, the number of reflection points (points at which the total internal reflection occurs) can be increased, thereby achieving a reduction in size of the water drop detection sensor by narrowing the mounting distance between the light emitting means 5 and light receiving means 6, while maintaining the same number of reflection points (i.e., detection points) as when no reflection film 52 is provided.

With the structure shown in Fig. 7 (b), by keeping the mounting distance between the light emitting means 5 and light receiving means 6 the same as or similar to that when no reflection film 52 is provided (see Fig. 6), and further by providing the reflection film 52, the number of reflection points is increased, thereby achieving a high sensitivity for the water drop detection sensor. Namely, a greater number of detection points can be obtained for the same length of optical path (i.e. less loss of detection light).

Further, the light emitting means 5 and the light receiving means are fixed on the interior surface of the windshield 2, while the light emitting surface 5a of the light emitting means 5 is oriented into the incident direction at which the reflected detection light undergoes the total internal reflection, and while the light receiving surface 6a of the light receiving means 6 is oriented into the direction of the detection light entering and propagating under total internal reflection.

Explanation will now be given on the operation of the water drop detection sensor 51 constructed as described above. With this construction, since a portion of the intermediate film 42 laying between the light shielding films 43 and 44 is formed with the reflection film 52, a greater number of detection points can be obtained while maintaining the same length of optical path, and further, since any detection light not reaching to the interior surface of the windshield 2 does not undergo total internal reflection thereupon, no water drops will be detected adhering upon the interior surface of the windshield 2. Accordingly, there is no chance that the wiper 3 could be erroneously operated by detecting any water drops adhering to or present not on the outside surface thereof, but on the interior surface.

Further, in a case where the light emitting element 11 comprises an LED, since the light emitted irradiates in every direction, as shown in Fig. 7, the percentage of light emitted from the light emitting surface 5a can be increased, in particular, that light that functions as detection light, by orienting the light emitting surface 5a into the incident direction in which the detection light undergoes total internal reflection, thereby obtaining an effective utilization of the light. Further, by orienting the light receiving surface 6a into the direction of the detection light which enters the glass and undergoes the total internal reflection, it is possible to detect the reflected detection light with certainty. Other functions and effects obtained with this embodiment are the same as or similar to those of the water drop detection sensor 41 shown in Fig. 6.

As shown in Fig. 8, a water drop detection sensor 61 according to a sixth embodiment of the present invention comprises the intermediate film 42 laying between the light shielding films 43 and 44, wherein a portion thereof is formed with an air layer 62. The other construction features are similar to or the same as those of the water drop detection sensor 51 shown above Fig. 7.

Explanation will now be given on an operation of the water drop detection sensor 61 constructed as described above. With this construction, since the portion of the intermediate film 42 laying between the light shielding films 43 and 44 is formed with the air layer 62, a greater number of detection points can be obtained while maintaining the same length of optical path. Other functions and the effects obtained with this embodiment are the same as or similar to those with the water drop detection sensor 51 shown in Fig. 7.

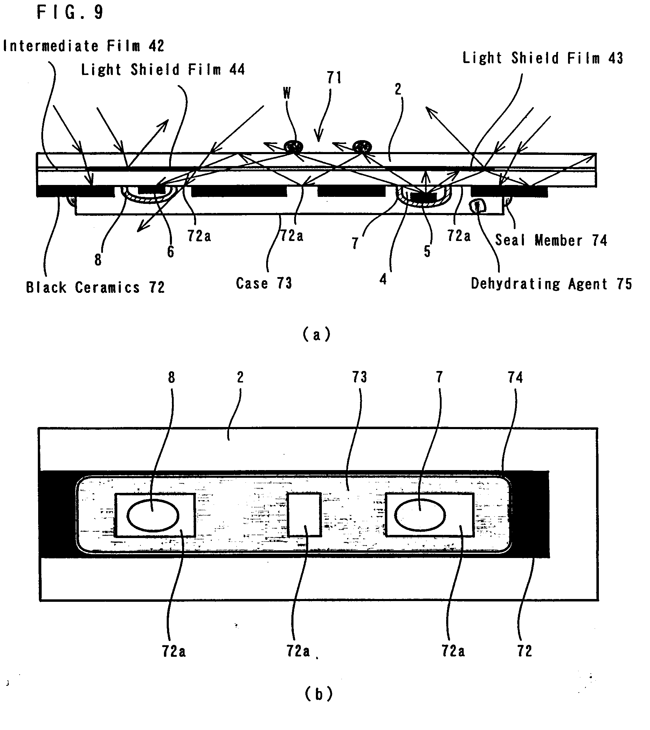

As shown in Fig. 9, in a water drop detection sensor 71 according to the seventh embodiment of the present invention, a belt-like black ceramic member 72 is painted or pasted on the interior surface of the windshield 2, in particular in the periphery portion thereof, and a non-pasted portion (a portion without any black ceramic) 72a is formed in the middle of the black ceramic member 72. And, in the non-pasted portion 72a the light emitting means 5 and the light receiving means 6 are fixed through the adhesive material 4.

Further, on the portion where the detection light emitted from the light emitting means 5 undergoes the total internal reflection, the non-pasted portion 72a of the black ceramic member 72 is formed for causing the total internal reflection under the same condition, forming the boundary surface between the air in the same manner as on the outside surface of the windshield 2.

Moreover, the light emitting means 5 and the light receiving means 6 are covered with a case made of glass or metal, for example. The case 73 is fixed on the black ceramic member 72 through a seal member 74 which also functions as the adhesive material, thereby defining a sealed space enclosed by the case 73 and the windshield 2. Within the sealed space defined by the case 73 and the windshield 2 a dehydration agent 75, such as a molecular sieve, is enclosed, for protection from condensation of dew on the non-pasted portion 72a of the black ceramic member 72 which functions as the reflection point.

However, as the method for fixing or mounting the case 73 onto the black ceramic member 72, other than by fixing it with the seal member 74 having the adhering function as mentioned above, the case 73 can be fixed on a stopping member by screws at the flange portion thereof, after fixing the stopping member on the black ceramic member 72 with the adhesive material. The other construction features are the same as or similar to those of the water drop detection sensor 41 according to the fourth embodiment of the present invention shown in Fig. 6.

Explanation will now be given on an operation of the water drop detection sensor 71 constructed as described above. The place pasted with the black ceramic member 72 of the windshield 2, where the case 73 is fixed, is also the place where an interior mirror is attached. Therefore, by utilizing the mounting base of the interior mirror and the case in common, it is possible to save on space required for attaching both. Other functions and effects obtained with this are same or similar to those with the water drop detection sensor 41 shown in Fig. 6.

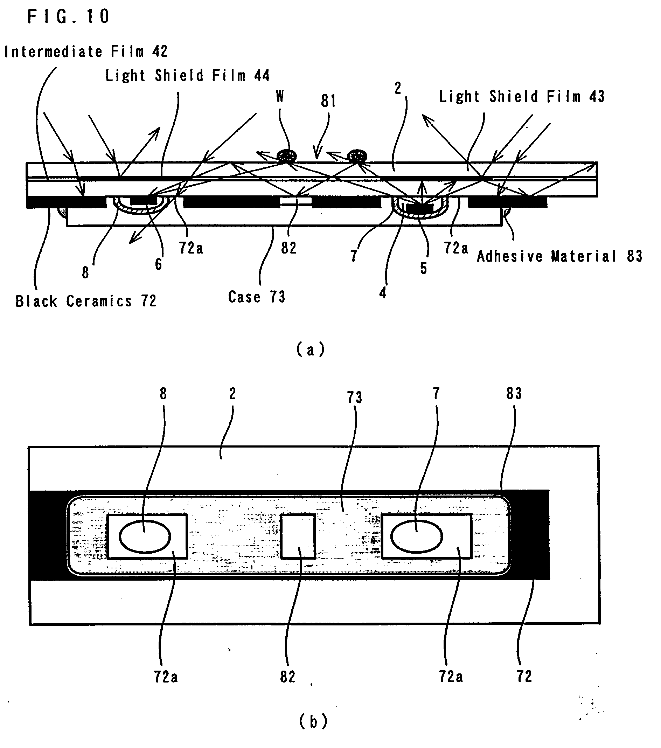

As shown in Fig. 10, in a water drop detection sensor 81 according to the eighth embodiment of the present invention, the reflection points laying between the light emitting means 5 and the light receiving means 6, i.e., all the non-pasted portion 72a of the black ceramic member 72, comprises a reflection film 82, and the other construction features thereof are almost the same as the water drop detection sensor 71 shown in Fig. 9.

Explanation will be given on an operation of the water drop detection sensor 81 constructed as described above. By forming all the reflection points with the reflection film 82, there is no necessity for taking into the consideration the condensation of dew, and therefore, it is not necessary to provide the dehydration agent 75.

Accordingly, it is not necessary to form the sealed space with the case 73 and the windshield 2, and then the case 73 need only be fixed onto the black ceramic member 72 with an ordinary adhesive material 83, and not the seal member 74. Other functions and effects with this embodiment are similar to the water drop detection sensor 71 shown in Fig. 9.

As shown in Fig. 11, a water drop detection sensor 91 according to the ninth embodiment of the present invention comprises the light emitting means 5, the light receiving means 6, and a transparent substrate 92, wherein the light emitting means 5 and the light receiving means 6 are fixed onto one side surface of the transparent substrate 92 at a predetermined distance thereinbetween while being covered with the case 73.

The case 73 is fixed onto the transparent substrate 92 with the seal member 74, thereby defining a sealed space between the case 73 and the transparent substrate 92.

Both the light emitting means 5 and the light receiving means 6 are fixed onto the transparent substrate 92 by being buried inside the adhesive materials 4. Here, the substrate on which the light emitting means 5 and the light receiving means 6 are fixed should not be restricted to the transparent substrate 92 such as the glass substrate, and it may be a light-permeable substrate, such as an opaque glass substrate or a resin substrate.

And, the water drop detection sensor 91 is fixed to the windshield 2 by bonding the other side surface of the transparent substrate 92 on the interior surface of the windshield 2 with the adhesive material 4. Further, as the transparent substrate 92 is used here a substrate of soda lime glass mainly containing $SiO_2$ therein, as same as the windshield 2. Also, as the method for attaching or mounting the transparent substrate 92 on which the light emitting means 5 and the light receiving means 6 are bonded, upon the interior surface of the windshield 2, also a silicon transparent adhesive sheet can be used for fixing, other than the adhesive material 4. The other constructions are almost same to those of the water drop detection sensor 71 shown in Fig. 9.

Explanation will be given on the operation of the water drop detection sensor 91 constructed as described above. Since the water drop detection sensor 91 is constructed by fixing the light emitting means 5 and the light receiving means 6 on the transparent substrate 92 at the predetermined distance thereinbetween in advance, it can be mounted on the interior surface of the windshield 2 with much ease, as compared to fixing the light emitting means 5 and the light receiving means 6 on the interior surface of the windshield separately. This thereby improves the ease of manufacturing. Other functions and effects with this embodiment are the same as those of the water drop detection sensor 71 shown in Fig. 9.

However, the water drop detection sensor 1, 21, 31, 41, 51, 61, 71, 81, or 91 is not restricted to only detect water drops W, but can also detect a liquid or other substance which has a known refractive index and which adheres to or is present upon the light-permeable substrate.

Further, as the permeable substrate on which the water drop detection sensor 1, 21, 31, 41, 51, 61, 71, 81, or 91 is fixed, other than the windshield 2 for use in a car, can be used a glass substrate, such as a rear window of a car or a door mirror thereof, a window glass of a of railroad car, of a ship or of an aircraft, a window glass of building, a mirror of a washstand, or a traffic mirror standing on a corner or curved road, etc., In other words, the invention can be applied to any glass substrate or resin substrate through which light is permeable.

Note that the signal corresponding to water drop detection by means of the water drop detection sensors 1, 21, 31, 41, 51, 61, 71, 81 or 91 can be applied also as a control signal for a wiper provided with the rear window or the door mirror, other than the wiper 3 provided with the windshield 2 of the car, and also can be used as a signal for initiating or regulating an anti-fog heater provided in the rear window or the door mirror of the car or in the mirror of a washstand.

Further note that although water drops are recited in this specification, the invention is equally applicable to water in forms other than drops, such as mist, fine spray, rain, liquid, etc., so long as the water present upon or adhering to the glass at the points of total internal reflection can take part in the total internal reflection phenomena.

## Claims

1. A water detection sensor for detecting water adhering to or present upon a light-permeable substrate (2), comprising:

light emitting means (5) for introducing detection light into said light-permeable substrate; and
light receiving means (6) for detecting reflected detection light, said reflected detection light being reflected by total internal reflection within said light-permeable substrate, wherein said light receiving means is provided on said light-permeable substrate.

2. A water detection sensor as claimed in claim 1, wherein said light emitting means (5) and said light receiving means (6) are provided on said light-permeable substrate (2) through a further substrate (22,92).

3. A water detection sensor as claimed in claim 1 or 2, wherein a light emitting surface (5a) of said light emitting means (5) is directed in a direction such that the reflected detection light undergoes total internal reflection, and a light receiving surface (6a) of said light receiving means (6) is directed in a direction so as to detect the reflected detection light which is reflected by the total internal reflection.

4. A water detection sensor as claimed in any preceding claim, further comprising:

an intermediate layer (42) provided within the light-permeable substrate (2); wherein
a portion of said intermediate layer opposite said light emitting means (5) and/or said light receiving means (6) comprises either a light shielding film (43,44) or a light reflecting film.

5. A water detection sensor as claimed in claim 4, wherein a portion of said intermediate layer located between said light emitting means (5) and said light receiving means (6) comprises a reflective film (52).

6. A water detection sensor as claimed in claim 4, wherein a portion of said intermediate layer located between said light emitting means (5) and said light receiving means (6) comprises a layer of air (62).

7. A water detection sensor as claimed in any preceding claim, further comprising:

a black ceramic member (72) painted or pasted on a surface of said light-permeable substrate (2), said light receiving means being provided on said light permeable substrate at a point where no black ceramic is pasted, and wherein said non-pasted portion (72a) of the black ceramic member is formed at a reflection point.

8. A water detection sensor as claimed in claim 7, wherein a reflection film (52) is provided at said reflection point in the portion (72a) which is not pasted with said black ceramic (72).

9. A water detection sensor as claimed in claim 8, wherein said light emitting means (5) and said light receiving means (6) are provided in the non-pasted portion (72a) of said black ceramic member (72) on the surface of said light-permeable substrate (2) through a further substrate (92).

FIG. 1

FIG. 2

Water Drop W

Wind Shield 2

6a

5a

Adhesive Material 4

4

7

Light Receiving Means 6

Light Emitting Means 5

Light Shield Member 8

FIG. 3

Water Drop Detection Sensor 1, 21, 31, 41, 51, 61, 71, 81, 91

Light Emitting Means 5

Light Receiving Means 6

11 Light Emitting Element
12 Driver Circuit
13 Light Receiving Element
14 Detector Circuit

15 Light Receiving Element
16 Detector Circuit
17 Amplifier Circuit

20 Wiper Driver Portion

F I G . 4

Transparent Substrate 22

F I G . 5

FIG. 6

Intermediate Film 42

Light Shield Film 44

Light Shield Film 43

W

2

8

4

4

7

6

5

41

FIG. 7

Reflection Film 52

(a)

Reflection Film 52

(b)

FIG. 8

Air Layer 62

FIG. 9

Intermediate Film 42
Light Shield Film 44
Light Shield Film 43
W
71
2

72a     72a     7     5     72a     Seal Member 74
8     6
Black Ceramics 72     Case 73     4     Dehydrating Agent 75

(a)

8     2     73     7     74

72a     72a     72a     72

(b)

F I G . 10

Intermediate Film 42
Light Shield Film 44
W    81    2    Light Shield Film 43
72a    82    7    72a    Adhesive Material 83
8    6    5    4
Black Ceramics 72    Case 73

( a )

8    2    73    7    83

72a    82    72a    72

( b )

FIG.11

Black Ceramics 72
Intermediate Film 42
Light Shield Film 44
91
W
2
Light Shield Film 43
72a
72a
4
8
6
Case 73
4
7
5
Seal Member 74
Transparent Substrate 92

FIG.12

Detection Surface        Total Reflection Point

101
102
100
103
104